# EUROPEAN PATENT SPECIFICATION

(11) **EP 2 119 965 B1**
(45) Date of publication and mention of the grant of the patent: **03.12.2014**
(21) Application number: 06833918.3
(22) Date of filing: 04.12.2006
(51) Int. Cl.: F23N 5/24, F23N 5/00, G08B 21/14, F23N 5/20

(54) **CIRCUIT FOR JUDGING CONCENTRATION OF CARBON DIOXIDE**
SCHALTUNG ZUR BEURTEILUNG DER KONZENTRATION VON KOHLENDIOXID
CIRCUIT POUR ÉVALUER LA CONCENTRATION EN DIOXYDE DE CARBONE

(43) Date of publication of application: 18.11.2009
(73) Proprietor: TOYOTOMI CO., LTD., Nagoya-shi, Aichi 467-0855 (JP)
(72) Inventor: KAWAMURA, Masanori, Nagoya-shi Aichi 467-0855 (JP)
(74) Representative: Hoffmann, Klaus-Dieter
(86) International application number: PCT/JP2006/324148
(87) International publication number: WO 2008/068830

(56) References cited:
- JP-A- 09 126 451
- JP-A- 2004 085 028
- JP-A- 2006 300 424

## Description

### TECHNICAL FIELD

The present invention relates to a carbon dioxide concentration determination circuit which uses a power source including a primary battery as an operation power source and generates an alarm signal when detecting that a carbon dioxide concentration has reached a predetermined high concentration or more.

### BACKGROUND ART

Japanese Patent Publication No. 2004-85028 discloses a CO alarm device that uses a primary battery as an operation power source and allows measurement of a carbon monoxide concentration over a long time period. In the technique disclosed in this publication, when it is determined that abnormality has occurred in a combustion device, a measurement interval (cycle) of the carbon monoxide concentration is shortened to be shorter than an ordinary measurement interval. Accordingly, the carbon monoxide concentration is not constantly measured at a short measurement interval. A life of the primary battery may be thereby kept long.
Patent Document 1: Japanese Patent Publication No. 2004-85028

### DISCLOSURE OF THE INVENTION

### PROBLEM TO BE SOLVED BY THE INVENTION

Recently, the NF standard in Europe has been revised, and it has become mandatory to stop operation of combustion devices when a carbon dioxide concentration in a room has reached a range from 0.8 - 0.2% to 0.8 + 0.2%. Carbon dioxide sensors, however, consume power more than carbon monoxide sensors. For this reason, when the combustion devices are used normally, it is necessary to set a capacity of a primary battery to be significantly large, in order to operate the carbon dioxide sensors for a long time period of one year or more without replacing the primary battery.

An object of the present invention is to provide a carbon dioxide concentration determination circuit in which a primary battery may be used as long as possible" without reducing the detection accuracy of a carbon dioxide concentration.

### MEANS FOR SOLVING THE PROBLEM

A carbon dioxide concentration determination circuit of the present invention comprises: a power source including a primary battery; and a carbon dioxide sensor that operates using the power source including the primary battery as an operation power source. Generally, the carbon dioxide concentration determination circuit is implemented in an indoor-installed combustion device such as an oil combustor, and is used in order to generate an alarm signal when a carbon dioxide concentration in a room reaches a high concentration.

In the present invention, the carbon dioxide concentration determination circuit further comprises: carbon dioxide concentration detection means, predicted concentration range determination means, measurement cycle determination means; high-concentration determination means; and alarm signal generation means.

The carbon dioxide concentration detection means detects the carbon dioxide concentration in the room based on an output of the carbon dioxide sensor, enabling the carbon dioxide sensor to perform an operation at a predetermined measurement cycle. The carbon dioxide concentration detection means detects the carbon dioxide concentration which is computable, based on the output of the carbon dioxide sensor. Accordingly, an output of the carbon dioxide concentration detection means is the computable one obtained by conversion of the output of the carbon dioxide sensor into the computable state. Enabling the carbon dioxide sensor to perform a detecting operation at a predetermined measurement cycle means that a current or a voltage necessary for operating the carbon dioxide sensor is supplied to the carbon dioxide sensor so that the carbon dioxide sensor outputs the measurement result. If the carbon dioxide sensor is in an inoperable state, it is desirable to completely stop supply of power to the carbon dioxide sensor. However, power used for preheating or the like, necessary for speeding up a response of the carbon dioxide sensor, may be of course kept on being supplied to the carbon dioxide sensor.

The predicted concentration range determination means determines a concentration range within which a predicted carbon dioxide concentration falls, from two or more preset concentration ranges. The predicted carbon dioxide concentration is predicted to be detected at a subsequent time of measurement and is computed based on the output of the carbon dioxide concentration detection means. The predicted carbon dioxide concentration may be determined by an arbitrary method. A change rate of the carbon dioxide concentration, for example, may be determined using measurement results at preceding two times of measurement and a detection result at the subsequent time of measurement may be predicted based on the change rate. In this case, in order to make an initial prediction, a dummy detection value may be provided in advance. Alternatively, a dummy change rate may be initially used. Preferably, the two or more concentration ranges are set so that an increase tendency of the carbon dioxide concentration in the room may be determined in a certain degree. The two or more concentration ranges may be set to a safe concentration range, a safe but a little high concentration range, a dangerous concentration range, and the like, for example. A width (range between upper and lower limit concentrations) in each of the two or more concentration ranges may be arbitrarily set. Generally, the smaller the number of the concentration ranges, the more the width is increased. Then, the larger the number of the concentration ranges, the more the width is reduced. The higher the concentration, the narrower the width of the concentration is set.

The measurement cycle determination means determines the measurement cycle such that the higher the upper limit concentration of the concentration range determined by the predicted concentration range determination means, the shorter becomes the measurement cycle where the carbon dioxide sensor may perform the detecting operation. If the upper limit concentration of the determined concentration range is lower, the measurement cycle is determined to be longer. With this arrangement, if the predicted carbon dioxide concentration at the subsequent time of measurement is lower, the measurement cycle of the carbon dioxide concentration is lengthened. If the predicted carbon dioxide concentration at the subsequent time of measurement is low, there is little possibility that the carbon dioxide concentration reaches a dangerous value. Thus, no problem occurs even if the measurement cycle is lengthened. Then, if the measurement cycle is lengthened, electric charge consumption of the primary battery is reduced. On contrast therewith, if the upper limit concentration of the concentration range is higher, the measurement cycle is shortened or reduced. In other words, if the predicted carbon dioxide concentration at the subsequent time of measurement is increased, the carbon dioxide concentration is more likely to reach the dangerous value. Thus, by shortening the measurement cycle, safety is ensured, though the primary battery is consumed quickly.

The high-concentration determination means renders the predicted concentration range determination means inoperative when the measurement cycle becomes the shortest. Then, when the number of times that the carbon dioxide concentration in the room has successively reached a predetermined high concentration in a highest one of the preset concentration ranges reaches preset q times (q being an integer not less than two but not more than six), the high-concentration determination means outputs a high-concentration determination signal based on the carbon dioxide concentration detected by the carbon dioxide concentration detection means. The "high concentration" is herein referred to as the concentration of carbon dioxide of a preset dangerous level in the highest concentration range. The NF standard requires the combustion device to stop operation when the carbon dioxide concentration ranges from 0.8 - 0.2% to 0.8 + 0.2%. Therefore, a value in a range from 0.9 - 0.1% to 0.9 + 0.1% (0.9% in an embodiment) selected from the above-mentioned range is set to the "high concentration". Naturally, the value of the "high concentration" is arbitrarily set according to the situation. If the measurement cycle becomes the shortest, the carbon dioxide concentration is getting close to the dangerous value. Then, in such a state, an actually measured carbon dioxide concentration value (in real time) is used to make determination without using the predicted carbon dioxide concentration at the subsequent time of measurement. However, experience shows that the carbon dioxide concentration in the room varies according to a movement of a person in the room. For this reason, even if the carbon dioxide concentration detected by the carbon dioxide concentration detection means has once reached the predetermined high concentration, the high-concentration determination means does not output the high-concentration determination signal just for that reason. When the number of times that the carbon dioxide concentration in the room has successively reached the predetermined high concentration reaches the preset q times (q being the integer not less than two but not more than six), the high-concentration determination means in the present invention outputs the high-concentration determination signal. The value of "q" is determined according to the condition in the room where the combustion device is used, and the operating condition of the combustion device that is used.

The alarm signal generation means generates an alarm signal when the high-concentration determination means outputs the high-concentration determination signal. The alarm signal may be used in an arbitrary manner. An alarm may be sounded, for example, using the alarm signal. However, in order to ensure safety, preferably, operation of a source device of carbon dioxide is stopped. Then, if the generating source of carbon dioxide is the combustion device, a fire extinguishing device is preferably operated to perform a fire extinguishing operation, in response to the alarm signal.

According to the present invention, while the carbon dioxide concentration is low, the measurement cycle is set to be long. Thus, the consumption of the primary battery may be restrained. Further, in the present invention, the measurement cycle is determined based on the predicted carbon dioxide concentration that is predicted to be detected at the subsequent time of measurement. Thus, the measurement cycle may be shortened before the actual carbon dioxide concentration falls within a dangerous concentration region. Accordingly, even if the measurement cycle is varied in order to restrain the consumption of the primary battery, safety is not reduced. Further, in the present invention, after the carbon dioxide concentration has fallen within the dangerous concentration range, it is determined that the carbon dioxide concentration has reached the high concentration only when the measurement value of the carbon dioxide concentration has successively reached the predetermined high concentration a plurality of times, based on the carbon dioxide concentration actually measured. Determination accuracy may be thereby enhanced.

Preferably, the predicted concentration range determination means includes the following two functions. A first function is the function of determining that the predicted carbon dioxide concentration falls within a concentration range higher than a current one of the concentration ranges when the predicted concentration range determination means determines once that the predicted carbon dioxide concentration falls within the concentration range higher than the current concentration range. Then, a second function is the function of determining that the predicted carbon dioxide concentration falls within a concentration range lower than the current concentration range when the predicted concentration range determination means successively determines, preset p times (p being an integer not less than two but not more than six), that the predicted carbon dioxide concentration falls within the concentration range lower than the current concentration range. Assume that the predicted concentration range determination means includes the second function in particular, and once the predicted concentration range determination means has determined that the predicted carbon dioxide concentration falls within the concentration range higher than the current concentration range. Then, the predicted concentration range determination means does not determine that the predicted carbon dioxide concentration falls within the concentration range lower than the current concentration range when the predicted carbon dioxide concentration is reduced from a current level just once. Accordingly, when increasing the measurement cycle, more careful determination is made. Thus, safety may be sufficiently ensured.

Preferably, the high-concentration determination means includes a function of determining that the carbon dioxide concentration in the room falls within a concentration range lower than the highest concentration range and rendering the predicted concentration range determination means operative when the high-concentration determination means successively determines preset r times (r being an integer not less than two but not more than six) that the carbon dioxide concentration in the room is a predetermined concentration or less in the concentration range lower than the highest concentration range. Assume that the high-concentration determination means includes such a function. Then, even when the carbon dioxide concentration is in a high concentration region and successively becomes the predetermined concentration or less, which is lower than the high concentration, the r times, the predicted concentration range determination means is rendered operative again. As a result, after it has been confirmed with reliability that the environment has been improved, the measurement cycle is lengthened again. Thus, the consumption of the primary battery may be restrained without reducing safety.

Even if the measurement cycle has become the shortest, it does not mean that the carbon dioxide concentration will immediately reach the concentration (high concentration) of the dangerous level. However, preferably, an increase in the carbon dioxide concentration toward the high concentration may be informed in advance. For that purpose, caution signal generation means is provided. The caution signal generation means generates a caution signal indicating that the carbon dioxide concentration in the room is getting close to the high concentration when the measurement cycle becomes the shortest and then the carbon dioxide concentration in the room reaches a preset concentration or more in the highest concentration range. The preset concentration is lower than the high concentration. Then, the caution signal generation means stops generation of the caution signal when the caution signal generation means successively detects preset times that the carbon dioxide concentration in the room is lower than the preset concentration. Based on generation of the caution signal, a warning should be sounded, or a lamp should be turned on and off, thereby calling attention.

When the primary battery is close to running down, carbon dioxide may not be able to be detected due to a reduction in the voltage of the primary battery. In such a case, it is necessary to clearly demonstrate that the carbon dioxide concentration cannot be determined. Then, in order to deal with such a case, preferably, a primary battery voltage detection circuit is provided. The primary battery voltage detection circuit includes a function of operating the alarm signal generation means when the primary battery voltage detection circuit measures the voltage of the primary battery a plurality of times at a predetermined cycle within a predetermined time period at a time of starting the carbon dioxide concentration determination circuit and successively detects preset times that the measured voltage is a preset voltage or less.

It is dangerous to operate the combustion device when the carbon dioxide concentration in the room has already reached the high concentration. Then, in order to deal with such a case, preferably, start-time high-concentration determination means is provided. The start-time high-concentration determination means includes a function of determining whether or not the carbon dioxide concentration in the room has successively reached the predetermined high concentration or more preset times within the predetermined time period at the time of starting the carbon dioxide determination circuit, based on the carbon dioxide concentration detected by the carbon dioxide concentration detection means. The start-time high-concentration determination means may also be substituted by the carbon dioxide concentration detection means and the high-concentration determination means described above. Then, when the start-time high-concentration determination means is provided, the alarm signal generation means should be configured to generate the alarm signal when the start-time high-concentration determination means determines that the carbon dioxide concentration in the room has successively reached the predetermined high concentration or more preset times. With this arrangement, when the carbon dioxide concentration in the room has reached the high concentration at the start of use of the combustion device, continuation of the operation of the combustion device may be prevented with reliability.

If the "high concentration" to be determined by the high-concentration determination means is set to the value in the range from 0.9 - 0.1% to 0.9 + 0.1% in order to be adapted to the NF standard, the predicted concentration range determination means may be configured to include the first to the third concentration ranges that are so set that 0.9 ± 0.1% is included in the highest concentration range. With this configuration, preferably, the measurement cycle determination means is configured to set the measurement cycle of 8 ± 1 minutes corresponding to the first concentration range, set the measurement cycle of 2 ± 0.5 minutes corresponding to the second concentration range, and set the measurement cycle of 10 ± 2 seconds corresponding to the third concentration range With this arrangement, the NF standard may be satisfied without increasing concentration range setting more than necessary.

### BRIEF DESCRIPTION OF THE DRAWINGS

Fig. 1 is a block diagram showing a configuration of an oil combustor in which a carbon dioxide concentration determination circuit according to the present invention is implemented.
Fig. 2 is a flowchart showing an algorithm of a main portion of the carbon dioxide concentration circuit.
Fig. 3 is a flowchart showing an algorithm of a main portion of software used when a main computing portion of the carbon dioxide concentration circuit is implemented by using computing means such as a computer.
Fig. 4 is a graph where a relationship between a change in a carbon dioxide concentration and a lapse of time in an operation according to an embodiment of the present invention is partially exaggerated, for an explanation purpose.

### BEST MODE FOR CARRYING OUT THE INVENTION

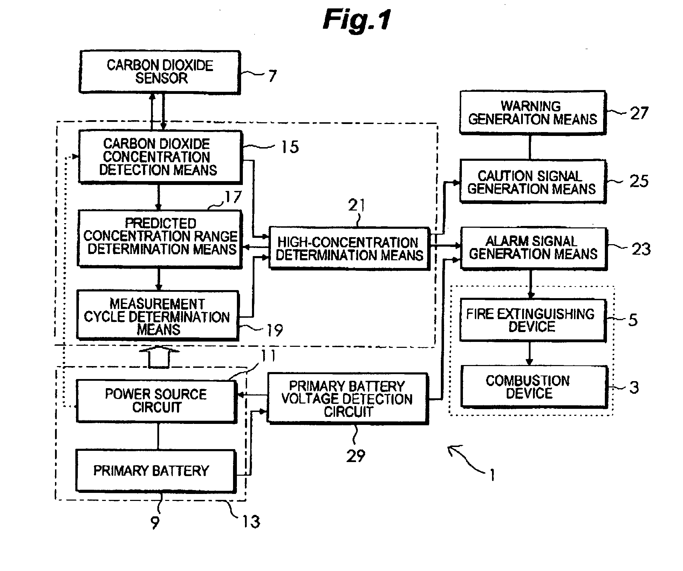

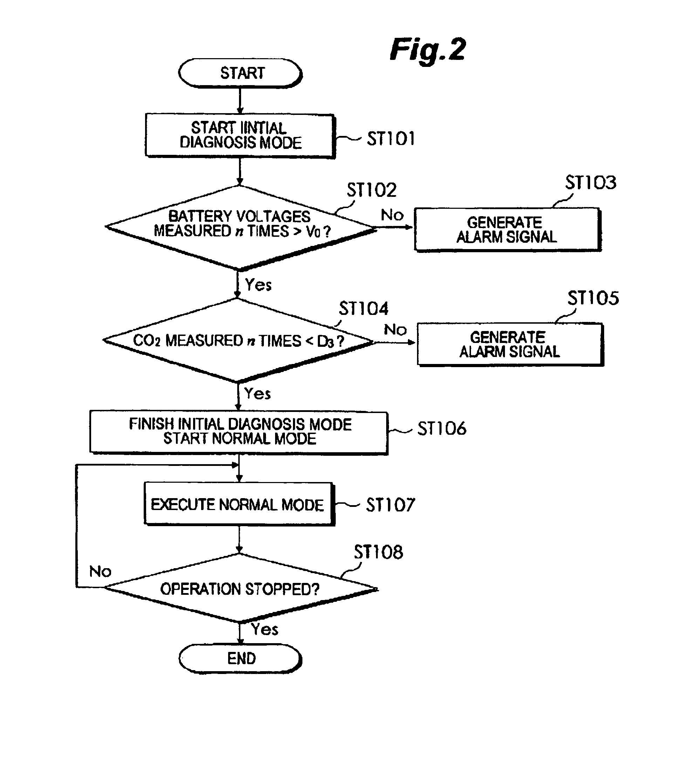

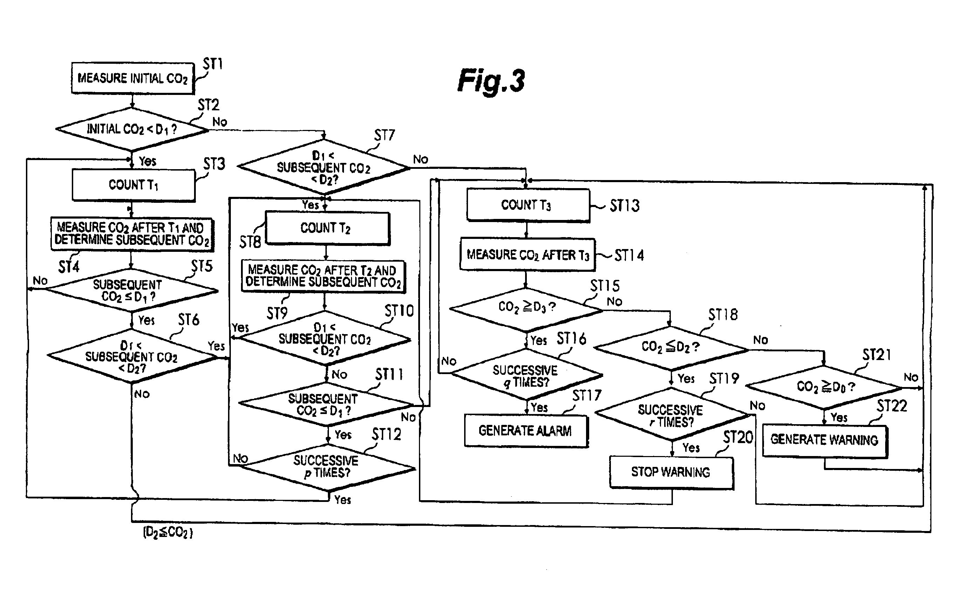

An example of a carbon dioxide concentration determination circuit in accordance with an embodiment of the present invention will be described below in detail with reference to drawings. Fig. 1 is a block diagram showing a configuration of an oil combustor in which a carbon dioxide concentration determination circuit 1 according to the present invention is implemented. Fig. 2 is a flowchart showing an algorithm of a main portion of the carbon dioxide concentration determination circuit 1. Fig. 3 is a flowchart showing an algorithm of a main portion of software used when a main computing portion of the carbon dioxide concentration determination circuit 1 is implemented by computing means such as a computer. The following description will explain an embodiment of the present invention together with the flowcharts shown in Figs. 2 and 3.

The oil combustor is an oil combustor of wick up-and-down type. In a combustion device, oil that has vaporized is combusted in a combustion cylinder. A combustion device 3 includes a fire extinguishing device 5 for stopping the combustion operation at the combustion cylinder when an earthquake occurs. Normally, this fire extinguishing device mechanically detects occurrence of the earthquake and then performs a fire extinguishing operation. When a carbon dioxide concentration becomes high and then alarm signal generation means 23, which will be described later, outputs an alarm signal, a vibration is given to the fire extinguishing device by operation of an electromagnetic coil. The fire extinguishing device thereby performs the fire extinguishing operation. When the alarm signal is generated, an alarm may be of course generated without causing the fire extinguishing device 5 to operate.

Actually, as the flowchart shown in Fig. 2, a normal diagnosis mode (from step ST106 to ST108) is executed after execution of an initial diagnosis mode (from step ST101 to ST105). The initial diagnosis mode will be described later.

The carbon dioxide concentration determination circuit 1 shown in Fig. 1 includes a carbon dioxide sensor 7. A carbon dioxide concentration sensor that uses infrared radiation, which relatively detects a change in the carbon dioxide concentration by a dispersive infrared method, for example, may be employed as the carbon dioxide sensor 7. Normally, the carbon dioxide sensor 7 is fixed at a position on an external wall of a case of the oil combustor, close to a floor.

The carbon dioxide sensor 7 is powered by a direct current power source 13 constituted from a primary battery 9 and a power source circuit 11. Two to four dry cells such as alkali dry cells connected in series are used as the primary battery 9. The power source circuit 11 includes a function of setting an output voltage of the primary battery 9 to a voltage necessary for operation of a computing element (not shown) constituted from a CPU or the like, used for executing computation, and a function of distributing and supplying necessary power to each electrical component.

The carbon dioxide sensor 7 gives an output, which is changed according to a change in the carbon dioxide concentration, to carbon dioxide concentration detection means 15. The carbon dioxide concentration detection means 15 detects the carbon dioxide concentration in a room, based on the output of the carbon dioxide sensor 7, enabling the carbon dioxide sensor 7 to operate at a predetermined measurement cycle. Based on the output of the carbon dioxide sensor 7, the carbon dioxide concentration detection means 15 outputs a detection signal corresponding to the carbon dioxide concentration as a signal that may undergo computational processing. Accordingly, an output of the carbon dioxide concentration detection means 15 is the computable one obtained by conversion of the output of the carbon dioxide sensor 7 into the computable state. When the carbon dioxide concentration sensor that uses infrared radiation, which detects a change in the carbon dioxide concentration by the dispersive infrared method described above is used as the carbon dioxide sensor 7, the carbon dioxide concentration detection means 15 supplies a current for generating infrared radiation to the carbon dioxide sensor 7 only at a time of measurement, thereby rendering the carbon dioxide sensor 7 operative. Accordingly, the carbon dioxide sensor 7 becomes operable for each measurement cycle to output a result of measurement. In the other periods, the carbon dioxide sensor 7 is inoperable.

The signal corresponding to the carbon dioxide concentration detected in the operable state of the carbon dioxide sensor 7 for each measurement cycle is supplied to predicted concentration range determination means 17 from the carbon dioxide concentration detection means 15. The predicted concentration range determination means 17 determines by computation a predicted carbon dioxide concentration that is predicted to be detected at a subsequent time of measurement, based on the output of the carbon dioxide detection means 15. Then, the predicted concentration range determination means 17 determines by computation a concentration range within which the predicted carbon dioxide concentration predicted to be detected at the subsequent time of measurement by the computation falls, from two or more preset concentration ranges (three concentration ranges in this embodiment). The predicted concentration range determination means 17 may determine the predicted carbon dioxide concentration by using an arbitrary method. In this embodiment, a change rate is determined using measurement results at preceding two times of measurement, and a detection result at the subsequent time of measurement is predicted, based on this change rate. In this embodiment, in order to allow an initial prediction after start-up, a dummy detection value (dummy measurement result) is provided in advance. Then, measurement cycle determination means 19 determines a measurement cycle in such a manner that the higher the upper limit concentration of the concentration range determined by the predicted concentration range determination means 17, the shorter becomes the measurement cycle where the carbon dioxide sensor 7 may perform the detecting operation.

Preferably, the two or more concentration ranges in the predicted concentration range determination means 17 are set so that an increase tendency of the carbon dioxide concentration in the room may be determined in a certain degree. In this embodiment, in order to be adapted to the NF standard, a "high concentration" to be determined by high-concentration determination means 21, which will be described later, is set to a certain value (which is "the high concentration") in a range from 0.9 - 0.1% to 0.9 + 0.1%. For doing so, the predicted concentration range determination means 17 sets the first to the third concentration ranges so that the certain value in the range from 0.9 - 0.1% to 0.9 + 0.1% is included in the highest concentration range. Specifically, as the first concentration range (corresponding to CO₂ ≤ D1 in Fig. 3), CO₂ ≤ 0.6% is set, and the cycle (measurement cycle T1) in the range from 8 - 1 minutes to 8 + 1 minutes is set, corresponding to the first concentration range. As the second concentration range (corresponding to D1 < CO₂ ≤ D2 in Fig. 3), 0.6 < CO₂ < 0.75% is set, and the cycle (measurement cycle T2) in the range from 2 - 0.5 minutes to 2 + 0.5 minutes is set, corresponding to the second concentration range. As the third concentration range (corresponding to D2 ≤ CO₂ in Fig. 3), 0.75 ≤ CO₂ % is set, and the cycle (measurement cycle T3) in the range from 10 - 2 seconds to 10 + 2 seconds is set, corresponding to the third concentration range. With this arrangement, the NF standard may be satisfied without increasing concentration range setting more finely than necessary. The first to the third concentration ranges in this embodiment are respectively defined to denote a safe concentration range, a safe but a little high concentration range, and a dangerous concentration range.

In this embodiment, when the upper limit concentration of the determined concentration range is lower, the measurement cycle is determined to be longer. With this arrangement, when the predicted carbon dioxide concentration at the subsequent time of measurement is lower, the measurement cycle of the carbon dioxide concentration is lengthened. When the predicted carbon dioxide concentration at the subsequent time of measurement is low, there is little possibility that the carbon dioxide concentration reaches a dangerous value. Thus, no problem occurs even if the measurement cycle is lengthened. Then, when the measurement cycle is lengthened, electric charge consumption of the primary battery is delayed. On contrast therewith, when the upper limit concentration of the concentration range is higher, the measurement cycle is shortened. In other words, when the predicted carbon dioxide concentration at the subsequent time of measurement is increased, the carbon dioxide concentration is more likely to reach the dangerous value. Thus, by reducing the measurement cycle, safety is ensured, though the consumption of the primary battery is quickened.

In the flowchart shown in Fig. 3, based on a measurement value of the carbon dioxide concentration at an initial time, the concentration range at the initial time is determined in steps ST1, ST2, and ST7. Though not described in Fig. 3, in steps ST2 and ST7, it is determined within which one of the first to the third concentration ranges the carbon dioxide concentration falls, based on the dummy initial measurement value, as described above. When it is determined that the carbon dioxide concentration falls within the first concentration range in step ST2, the measurement cycle is determined to be the measurement cycle T1 in step ST3. Then, after the measurement cycle T1 is counted, the procedure proceeds to step ST4. In step ST4, the carbon dioxide concentration is measured after the measurement cycle T1, and a predicted carbon dioxide concentration at the subsequent time of measurement is computed. Then, in steps ST5 and ST6, it is determined whether the predicted carbon dioxide concentration at the subsequent time remains within the first concentration range (CO₂ s D1), falls within the second concentration range (D1 < CO₂ < D2) or the third concentration range (D2 ≤ CO₂). When the predicted carbon dioxide concentration at the subsequent time of measurement remains within the first concentration range (CO₂ ≤ D1), the measurement cycle remains unchanged at T1. When the predicted carbon dioxide concentration at the subsequent time of measurement falls within the second concentration range (D1 < CO₂ < D2), the procedure proceeds to step ST8, which will be described later. When the predicted carbon dioxide concentration at the subsequent time of measurement falls within the third concentration range (D2 ≤ CO₂), the procedure proceeds to step ST13, which will be described later.

When it is determined that the carbon dioxide concentration falls within the second concentration range (D1 < CO₂ < D2) at the initial or subsequent time of measurement, the measurement cycle is determined to be the measurement cycle T2 in step ST8. Then, after the measurement cycle T2 is counted in step ST8, the procedure proceeds to step ST9. In step ST9, the carbon dioxide concentration is measured after the measurement cycle T2, thereby computing a predicted carbon dioxide concentration at the subsequent time of measurement. Then, it is determined in steps ST10 and ST11 whether the predicted carbon dioxide concentration at the subsequent time of measurement remains within the second concentration range (D1 < CO₂ < D2), falls within the third concentration range (D2 s CO₂), or falls within the first concentration range (CO₂ ≤ D1). When the predicted carbon dioxide concentration at the subsequent time of measurement remains within the second concentration range (D1 < CO₂ < D2), the measurement cycle remains unchanged at the measurement cycle T2. When the predicted carbon dioxide concentration falls within the third concentration range (D2 ≤ CO₂), the procedure proceeds to step ST13, which will be described later. When it is determined that the predicted carbon dioxide concentration at the subsequent time of measurement successively falls within the first concentration range (CO₂ ≤ D1) p times, the procedure returns to step ST3 from step ST12. To be more specific, when transition from the second concentration range to the first concentration range is made in this embodiment, transition of the concentration range is not effected by one-time detection of reduction of the carbon dioxide concentration. Accordingly, when increasing the measurement cycle, more careful determination is made. Thus, safety may be sufficiently ensured. Preferably, the value of p is an integer not less than two but not more than six.

The operations of the predicted concentration range determination means 17 and the measurement cycle determination means 19 were above-mentioned. Referring back to Fig. 1, when the measurement cycle becomes the shortest measurement cycle (T3), the high-concentration determination means 21 renders the predicted concentration range determination means 17 inoperative. Then, the high-concentration determination means 21 outputs a high-concentration determination signal, based on the carbon dioxide concentration detected by the carbon dioxide concentration detection means 15, when the number of times that the carbon dioxide concentration in the room successively has reached a predetermined high concentration reaches preset q times (q being an integer not less than two). The "high concentration" is herein defined to be the concentration of carbon dioxide of a preset dangerous level. In this embodiment, the value of the "high concentration" is set to be the certain value in the range from 0.9 - 0.1% to 0.9 + 0.1% in order to be adapted to the NF standard. In this embodiment, the high-concentration determination means 21 uses an actually measured carbon dioxide concentration value (in real time) to make determination without using the predicted carbon dioxide concentration at the subsequent time of measurement. However, experience shows that the carbon dioxide concentration in the room varies according to a movement of a person in the room. For this reason, even if the carbon dioxide concentration detected by the carbon dioxide concentration detection means 15 has once reached the high concentration, the high-concentration determination means 21 does not output the high-concentration determination signal just for that reason. When the number of times that the carbon dioxide concentration in the room has successively reached the predetermined high concentration reaches the preset q times (q being the integer not less than two but not more than six), the high-concentration determination means 21 in this embodiment outputs the high-concentration determination signal. When the high-concentration determination signal is output, the alarm signal generation means 23 outputs the alarm signal to the fire extinguishing device 5.

The high-concentration determination means 21 in this embodiment includes a function of determining that the carbon dioxide concentration in the room falls within a concentration range lower than the highest concentration range and rendering the predicted concentration range determination means 17 operative when the high-concentration determination means 21 successively determines preset r times (r being an integer not less than two but not more than six) that the carbon dioxide concentration in the room is a predetermined concentration or less in the concentration range lower than the highest concentration range. As a result, even if the carbon dioxide concentration is in the high concentration region (third concentration range), the high-concentration determination means 21 determines the carbon dioxide concentration has fallen within the concentration range lower than the highest concentration range when the carbon dioxide concentration successively becomes the predetermined concentration or less in the concentration range lower than the third concentration range the r times. Then, the high-concentration determination means 21 renders the predicted concentration range determination means 17 operative again. As a result, after it has been confirmed with reliability that the environment has been improved, the measurement cycle may be lengthened again. Thus, the consumption of the primary battery may be restrained without reducing safety.

Even if the measurement cycle has become the shortest (measurement cycle T3), it does not mean that the carbon dioxide concentration will immediately reach the concentration (high concentration) of the dangerous level. However, preferably, an increase in the carbon dioxide concentration toward the high concentration may be informed in advance. Then, in this embodiment, caution signal generation means 25 is provided. The caution signal generation means 25 generates a caution signal indicating that the carbon dioxide concentration in the room is getting close to the high concentration when the measurement cycle becomes the shortest and then the carbon dioxide concentration in the room reaches a preset concentration (specifically, 0.8%) or more in the highest concentration range. The preset concentration is lower than the high concentration. Then, the caution signal generation means 25 stops generation of the caution signal when the caution signal generation means successively detects preset times that the carbon dioxide concentration in the room is lower than both the high concentration and the preset concentration. In this embodiment, the preset times are the same as the r times (r being the integer not less than two but not more than six), but are not limited to this setting. In this embodiment, based on generation of the caution signal, a warning is sounded, thereby calling attention of a user.

The functions of the high-concentration determination means 21 to warning generation means 27 in this embodiment are implemented in steps ST13 to ST22 in Fig. 3. When it is determined at the initial or subsequent time of measurement that the carbon dioxide concentration falls within the third concentration range (D2 ≤ CO₂), the measurement cycle is determined to be the measurement cycle T3 in step ST13. Then, after the measurement cycle T3 has been counted in step ST14, the procedure proceeds to step ST15. In step ST15, it is determined whether or not the carbon dioxide concentration after the measurement cycle T3 is a high concentration D3 (0.9% in this embodiment) or more. When it is then determined that the carbon dioxide concentration is the high concentration D3 or more, the procedure proceeds to step ST16. When the carbon dioxide concentration successively reaches the high concentration D3 or more the q times in step ST16, the procedure proceeds to step ST17. Then, the alarm signal is generated. When it is determined in step ST15 that the carbon dioxide concentration is lower than the high concentration D3, the procedure proceeds to step ST18. In step ST18, it is determined whether the carbon dioxide concentration is the concentration in the second concentration range or lower or within the third concentration range. When it is determined that the carbon dioxide concentration is within the third concentration range, the procedure proceeds to step ST21. Then, it is determined whether the carbon dioxide concentration is a preset concentration D0 (0.8% in this embodiment) or more, which is lower than the high concentration. Then, when it is determined in step ST21 that the carbon dioxide concentration is the preset concentration D0 (0.8% in this embodiment) or more, the procedure proceeds to step ST22. A warning is then generated. Otherwise, the procedure returns to step ST13. When it is successively measured the r times that the carbon dioxide concentration is the concentration in the second concentration range or less, the procedure proceeds to step ST20. Then, if the warning is being output, the warning is stopped.

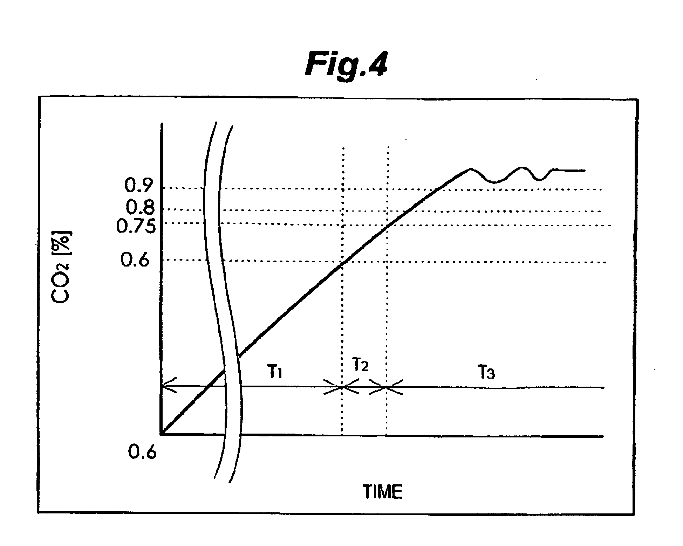

Fig. 4 is a graph where a relationship between a change in the carbon dioxide concentration and a lapse of time in the operation according to an embodiment of the present invention" is partially exaggerated, for an explanation purpose. Periods T1, T2 and T3 shown in Fig. 4 respectively indicate periods of the measurement cycles T1, T2, and T3. The periods T1 to T3 shown in Fig. 4 are plotted for the explanation purpose. Usually, it is often the case that the period of the measurement cycle T1 is significantly long, and the periods of the measurement cycles T2 and T3 are not so long, when the combustion device is not operated before measurement of the carbon dioxide concentration. As shown in Fig. 4, the present invention serves effectively, especially when the carbon dioxide concentration varies after the measurement period T3.

Next, referring back to Fig. 2, the initial diagnosis mode will be described below. In the initial diagnosis mode, before a normal mode shown in Fig. 3 is started, it is diagnosed whether or not the normal mode can be executed. A time period where the initial diagnosis mode is performed is on the order of 30 to 90 seconds, for example. Accordingly, even if the combustion device performs a combustion operation during the time period of this extent, a large accident will not be brought about. When it is diagnosed in the initial diagnosis mode that the normal mode cannot be executed, the alarm signal is generated. First, in step ST102, it is determined whether or not voltages (battery voltages) of the primary battery measured n times are all not more than a preset voltage. This determination is made because, when the primary battery is close to running down, carbon dioxide may not be able to be detected due to a reduction in the voltage of the primary battery. In such a case, in order to prevent an accident that may occur due to inability of determination of the carbon dioxide concentration, the alarm signal is generated in this embodiment. Then, in this embodiment, a primary battery voltage detection circuit 29 is provided, as shown in Fig. 1. The primary battery voltage detection circuit 29 includes the following function. The primary battery voltage detection circuit 29 measures the voltage of the primary battery 9 a plurality of times at a predetermined cycle within a predetermined time period at a time of starting the carbon dioxide concentration determination circuit. Then, when the primary battery voltage detection circuit 29 successively detects preset times (n times: n being an integer of two or more) that the measured voltage is a preset voltage or less, the primary battery voltage detection circuit 29 drives the alarm signal generation means 23 to generate the alarm signal (which is implemented in steps ST102 and ST203 in Fig. 2).

Steps ST104 and 105 in Fig. 2 are the steps for outputting the alarm signal when the carbon dioxide concentration in the room has already reached the high concentration at the time of starting the carbon dioxide concentration determination circuit. Preferably, start-time high-concentration determination means is provided in order to execute these steps. In this embodiment, the high-concentration determination means 21 constitutes the start-time high-concentration determination means at the time of starting the carbon dioxide concentration determination circuit. The start-time high-concentration determination means includes a function of determining whether or not the carbon dioxide concentration in the room has successively reached the predetermined high concentration or more preset times (n times) within the predetermined time period at the time of starting the carbon dioxide concentration determination circuit, based on the carbon dioxide concentration detected by the carbon dioxide concentration detection means 15. Then, the alarm signal generation means 23 generates the alarm signal which indicates that the start-time high-concentration determination means has determined that the carbon dioxide concentration in the room successively reached the predetermined high concentration or more preset times at the time of starting the carbon dioxide concentration determination circuit. With this arrangement, when the carbon dioxide concentration in the room has reached the predetermined high concentration at the start of use of the combustion device, continuation of the operation of the combustion device may be prevented with reliability.

Referring to Fig. 2, when the initial diagnosis mode is finished in step ST106 and the normal diagnosis mode is started, the normal mode shown in Fig. 3 is started in step ST107. Then, when completion of the operation is detected in step ST108, the procedure is finished.

In the above-mentioned embodiment, the initial diagnosis mode is executed. Only the normal mode may be of course executed, without executing the initial diagnosis mode. In the above-mentioned embodiment, the high-concentration determination means 21 constitutes the start-time high-concentration determination means. The start-time high-concentration determination means may be of course separately provided.

This embodiment is provided to satisfy the NF standard. Accordingly, in order to satisfy another standard, the ranges of the concentration ranges, the measurement cycle, or the value of the predetermined high concentration may be of course changed.

In this embodiment, the carbon dioxide concentration determination circuit of the present invention is applied to the oil combustor. The carbon dioxide concentration determination circuit of the present invention may be of course applied to other applications.

### INDUSTRIAL APPLICABILITY

According to the present invention, while the carbon dioxide concentration is low, the measurement cycle is set to be long. Thus, an advantage is obtained that the consumption of the primary battery may be restrained. Further, according to the present invention, the measurement cycle is determined based on the predicted carbon dioxide concentration that is predicted to be detected at the subsequent time of measurement. Thus, the measurement cycle may be shortened before the actual carbon dioxide concentration falls within the dangerous concentration range. Accordingly, even when the measurement cycle is varied in order to restrain the consumption of the primary battery, it may provide an advantage that safety level is not reduced. Further , in the present invention, after the carbon dioxide concentration has fallen within the dangerous concentration range, it is determined that the carbon dioxide concentration has reached the predetermined high concentration only when the measurement value of the carbon dioxide concentration has successively reached the predetermined high concentration a plurality of times, based on the carbon dioxide concentration actually measured. Accordingly, it may provide an advantage that determination accuracy may be enhanced.

## Claims

1. A carbon dioxide concentration determination circuit comprising:
a power source (13) including a primary battery (9);
a carbon dioxide sensor (7) that operates using the power source including the primary battery, as an operation power source;
carbon dioxide concentration detection means (15) for detecting a carbon dioxide concentration in a room based on an output of the carbon dioxide sensor, enabling the carbon dioxide sensor to perform a detecting operation at a predetermined measurement cycle and;
predicted concentration range determination means (17) for determining a concentration range within which a predicted carbon dioxide concentration falls, from two or more preset concentration ranges, the predicted carbon dioxide concentration being predicted to be detected at a subsequent time of measurement and being computed based on an output of the carbon dioxide concentration detection means;
measurement cycle determination means (19) for determining the measurement cycle such that the higher an upper limit concentration within the concentration range determined by the predicted concentration range determination means, the shorter becomes the measurement cycle where the carbon dioxide sensor may perform the detecting operation;
high-concentration determination means (21) for rendering the predicted concentration range determination means inoperative if the measurement cycle becomes the shortest and outputting a high-concentration determination signal based on the carbon dioxide concentration detected by the carbon dioxide concentration detection means, the high-concentration determination signal being outputted when a number of times that the carbon dioxide concentration in the room has successively reached a predetermined high concentration in a highest one of the preset concentration ranges, reaches preset q times (q being an integer not less than two but not more than six) : and
alarm signal generation means (23) for generating an alarm signal when the high-concentration determination means outputs the high-concentration determination signal.

2. The carbon dioxide concentration determination circuit according to claim 1, wherein
the predicted concentration range determination means includes functions of:
determining that the predicted carbon dioxide concentration falls within a concentration range higher than a current one of the concentration ranges when the predicted concentration range determination means determines once that the predicted carbon dioxide concentration falls within the concentration range higher than the current concentration range; and
determining that the predicted carbon dioxide concentration falls within a concentration range lower than the current concentration range when the predicted concentration range determination means successively determines, preset p times (p being an integer not less than two but not more than six), that the predicted carbon dioxide concentration falls within the concentration range lower than the current concentration range.

3. The carbon dioxide concentration determination circuit according to claim 1 or 2, wherein
the high-concentration determination means includes a function of determining that the carbon dioxide concentration in the room falls within a concentration range lower than the highest concentration range and rendering the predicted concentration range determination means operative if the high-concentration determination means successively determines preset r times (r being an integer not less than two but not more than six) that the carbon dioxide concentration in the room is a predetermined concentration or less in the concentration range lower than the highest concentration range.

4. The carbon dioxide concentration determination circuit according to claim 1. further comprising:
caution signal generation means (25) for generating a caution signal indicating that the carbon dioxide concentration in the room is getting close to the high concentration if the measurement cycle becomes the shortest and the carbon dioxide concentration in the room reaches a predetermined concentration or more which is lower than the predetermined high concentration ,in the highest concentration range, and then stopping generation of the caution signal if the caution signal generation means successively detects preset times that the carbon dioxide concentration in the room is lower than the predetermined concentration.

5. The carbon dioxide concentration determination circuit according to claim 1, further comprising:
a primary battery voltage detection circuit (29) that drives the alarm signal generation means to generate the alarm signal if the primary battery voltage detection circuit measures a voltage of the primary battery a plurality of times at a predetermined cycle within a predetermined time period at a time of starting the carbon dioxide concentration determination circuit and successively detects preset times that the measured voltage is a predetermined voltage or less.

6. The carbon dioxide concentration determination circuit according to claim 5, further comprising:
start-time high-concentration determination means for determining whether or not the carbon dioxide concentration in the room has successively reached the predetermined high concentration or more the preset times within the predetermined time period at the time of starting the carbon dioxide determination circuit, based on the carbon dioxide concentration detected by the carbon dioxide concentration detection means;
the alarm signal generation means generating the alarm signal if the start-time high-concentration determination means determines that the carbon dioxide concentration in the room has successively reached the predetermined high concentration or more the preset times.

7. The carbon dioxide concentration determination circuit according to claim 1, wherein
the high concentration is set to a value in a range from 0.9 - 0.1% to 0.9 + 0.1% in the high-concentration determination means;
the predicted concentration range determination means includes a first concentration range, a second concentration range and a third concentration range that are so set that 0.9 ± 0.1% is included in the highest concentration range in the first to third concentration ranges; and
the measurement cycle determination means is configured to set the measurement cycle of 8 ± 1 minutes corresponding to the first concentration range, set the measurement cycle of 2 ± 0.5 minutes corresponding to the second concentration range, and set the measurement cycle of 10 ± 2 seconds corresponding to the third concentration range.

8. The carbon dioxide concentration determination circuit according to claim 1, wherein
the carbon dioxide concentration determination circuit is implemented in an indoor-installed combustion device and the alarm signal is used as a signal that commands a fire-extinguishing device provided at the combustion device to perform a fire-extinguishing operation.

## Patentansprüche

1. Kohlendioxidkonzentrations-Bestimmungsschaltung, welche umfasst:
eine Energiequelle (13), die eine Primärbatterie (9) aufweist;
einen Kohlendioxidsensor (7), der unter Verwendung der Energiequelle, welche die Primärbatterie aufweist, als eine Betriebsenergiequelle arbeitet;
Kohlendioxidkonzentrations-Erfassungsmittel (15) zum Erfassen einer Kohlendioxidkonzentration in einem Raum auf der Basis eines Ausgangs des Kohlendioxidsensors, welche den Kohlendioxidsensor in die Lage versetzen, einen Erfassungsvorgang in einem vorbestimmten Messzyklus auszuführen; und
Bestimmungsmittel (17) für den vorhergesagten Konzentrationsbereich zum Bestimmen eines Konzentrationsbereichs, in welchen eine vorhergesagte Kohlendioxidkonzentration fällt, aus zwei oder mehr voreingestellten Konzentrationsbereichen, wobei die vorhergesagte Kohlendioxidkonzentration ein vorhergesagter Wert für eine zu einem nachfolgenden Messzeitpunkt erfasste Konzentration ist und auf der Basis eines Ausgangs der Kohlendioxidkonzentrations-Erfassungsmittel berechnet wird;
Messzyklus-Bestimmungsmittel (19) zum Bestimmen des Messzyklus, derart, dass, je höher eine obere Grenzkonzentration innerhalb des durch die Bestimmungsmittel für den vorhergesagten Konzentrationsbereich bestimmten Konzentrationsbereichs ist, desto kürzer der Messzyklus wird, in dem der Kohlendioxidsensor den Erfassungsvorgang ausführen kann;
Hochkonzentrations-Bestimmungsmittel (21) zum Außerbetriebsetzen der Bestimmungsmittel für den vorhergesagten Konzentrationsbereich, falls der Messzyklus der kürzeste wird, und Ausgeben eines Hochkonzentrations-Bestimmungssignals auf der Basis der durch die Kohlendioxidkonzentrations-Erfassungsmittel erfassten Kohlendioxidkonzentration, wobei das Hochkonzentrations-Bestimmungssignal ausgegeben wird, wenn eine Anzahl, wie oft die Kohlendioxidkonzentration in dem Raum nacheinander eine vorbestimmte hohe Konzentration in einem höchsten der voreingestellten Konzentrationsbereiche erreicht hat, eine voreingestellte Zahl q erreicht (wobei q eine ganze Zahl ist, die nicht kleiner als zwei, jedoch nicht größer als sechs ist); und
Alarmsignal-Erzeugungsmittel (23) zum Erzeugen eines Alarmsignals, wenn die Hochkonzentrations-Bestimmungsmittel das Hochkonzentrations-Bestimmungssignal ausgeben.

2. Kohlendioxidkonzentrations-Bestimmungsschaltung nach Anspruch 1, wobei
die Bestimmungsmittel für den vorhergesagten Konzentrationsbereich folgende Funktionen aufweisen:
Bestimmen, dass die vorhergesagte Kohlendioxidkonzentration in einen Konzentrationsbereich fällt, der höher als ein aktueller von den Konzentrationsbereichen ist, wenn die Bestimmungsmittel für den vorhergesagten Konzentrationsbereich einmal bestimmen, dass die vorhergesagte Kohlendioxidkonzentration in den Konzentrationsbereich fällt, der höher als der aktuelle Konzentrationsbereich ist; und
Bestimmen, dass die vorhergesagte Kohlendioxidkonzentration in einen Konzentrationsbereich fällt, der niedriger als der aktuelle Konzentrationsbereich ist, wenn die Bestimmungsmittel für den vorhergesagten Konzentrationsbereich eine voreingestellte Anzahl p von Malen nacheinander (wobei p eine ganze Zahl ist, die nicht kleiner als zwei, jedoch nicht größer als sechs ist) bestimmen, dass die vorhergesagte Kohlendioxidkonzentration in den Konzentrationsbereich fällt, der niedriger als der aktuelle Konzentrationsbereich ist.

3. Kohlendioxidkonzentrations-Bestimmungsschaltung nach Anspruch 1 oder 2, wobei
die Hochkonzentrations-Bestimmungsmittel folgende Funktion aufweisen: Bestimmen, dass die Kohlendioxidkonzentration in dem Raum in einen Konzentrationsbereich fällt, der niedriger als der höchste Konzentrationsbereich ist, und Inbetriebsetzen der Bestimmungsmittel für den vorhergesagten Konzentrationsbereich, falls die Hochkonzentrations-Bestimmungsmittel eine voreingestellte Anzahl r von Malen nacheinander (wobei r eine ganze Zahl ist, die nicht kleiner als zwei, jedoch nicht größer als sechs ist) bestimmen, dass die Kohlendioxidkonzentration in dem Raum ein vorbestimmte Konzentration oder niedriger in dem Konzentrationsbereich ist, der niedriger als der höchste Konzentrationsbereich ist.

4. Kohlendioxidkonzentrations-Bestimmungsschaltung nach Anspruch 1, welche ferner umfasst:
Warnsignal-Erzeugungsmittel (25) zum Erzeugen eines Warnsignals, welches anzeigt, dass die Kohlendioxidkonzentration in dem Raum der hohen Konzentration nahekommt, falls der Messzyklus der kürzeste wird und die Kohlendioxidkonzentration in dem Raum eine vorbestimmte Konzentration oder mehr erreicht, welche niedriger als die vorbestimmte hohe Konzentration in dem höchsten Konzentrationsbereich ist, und danach Beenden der Erzeugung des Warnsignals, falls die Warnsignal-Erzeugungsmittel eine voreingestellte Anzahl von Malen nacheinander erkennen, dass die Kohlendioxidkonzentration in dem Raum niedriger als die vorbestimmte Konzentration ist.

5. Kohlendioxidkonzentrations-Bestimmungsschaltung nach Anspruch 1, welche ferner umfasst:
eine Primärbatteriespannungs-Erfassungsschaltung (29), welche die Alarmsignal-Erzeugungsmittel ansteuert, so dass sie ein Alarmsignal erzeugen, falls die Primärbatteriespannungs-Erfassungsschaltung eine Spannung der Primärbatterie mehrere Male gemäß einem vorbestimmten Zyklus innerhalb eines vorbestimmten Zeitraums zu einer Zeit des Startens der Kohlendioxidkonzentrations-Bestimmungsschaltung misst und eine voreingestellte Anzahl von Malen nacheinander erkennt, dass die gemessene Spannung eine vorbestimmte Spannung oder niedriger ist.

6. Kohlendioxidkonzentrations-Bestimmungsschaltung nach Anspruch 1, welche ferner umfasst:
Startzeit-Hochkonzentrations-Bestimmungsmittel zum Bestimmen, ob die Kohlendioxidkonzentration in dem Raum innerhalb des vorbestimmten Zeitraums zur Zeit des Startens der Kohlendioxidkonzentrations-Bestimmungsschaltung die voreingestellte Anzahl von Malen nacheinander die vorbestimmte hohe Konzentration oder mehr erreicht hat oder nicht, auf der Basis der Kohlendioxidkonzentration, die durch die Kohlendioxidkonzentrations-Erfassungsmittel erfasst wird;
Alarmsignal-Erzeugungsmittel, welche das Alarmsignal erzeugen, falls die Startzeit-Hochkonzentrations-Bestimmungsmittel bestimmen, dass die Kohlendioxidkonzentration in dem Raum die voreingestellte Anzahl von Malen die vorbestimmte hohe Konzentration oder mehr erreicht hat.

7. Kohlendioxidkonzentrations-Bestimmungsschaltung nach Anspruch 1, wobei
die hohe Konzentration in den Hochkonzentrations-Bestimmungsmitteln auf einen Wert in einem Bereich von 0,9 - 0,1 % bis 0,9 + 0,1 % eingestellt ist;
die Bestimmungsmittel für den vorhergesagten Konzentrationsbereich einen ersten Konzentrationsbereich, einen zweiten Konzentrationsbereich und einen dritte Konzentrationsbereich aufweisen, welche so eingestellt sind, dass 0,9 ± 0,1 % in dem höchsten Konzentrationsbereich von dem ersten bis dritten Konzentrationsbereich enthalten ist; und
die Messzyklus-Bestimmungsmittel dafür ausgebildet sind, den Messzyklus, der dem ersten Konzentrationsbereich entspricht, auf 8 ± 1 Minuten einzustellen, den Messzyklus, der dem zweiten Konzentrationsbereich entspricht, auf 2 ± 0,5 Minuten einzustellen, und den Messzyklus, der dem dritten Konzentrationsbereich entspricht, auf 10 ± 2 Sekunden einzustellen.

8. Kohlendioxidkonzentrations-Bestimmungsschaltung nach Anspruch 1, wobei
die Kohlendioxidkonzentrations-Bestimmungsschaltung in einer in einem Innenraum installierten Verbrennungsvorrichtung implementiert ist und das Alarmsignal als ein Signal verwendet wird, welches eine an der Verbrennungsvorrichtung vorgesehene Feuerlöschvorrichtung steuert, um einen Feuerlöschvorgang auszuführen.

## Revendications

1. Circuit de détermination de la concentration de dioxyde de carbone comprenant :
une source d'énergie (13) comprenant une batterie primaire (9) ;
un capteur de dioxyde de carbone (7) qui fonctionne en utilisant la source d'énergie comprenant la batterie primaire, en tant que source d'énergie de fonctionnement ;
un moyen de détection de la concentration de dioxyde de carbone (15) pour détecter une concentration de dioxyde de carbone dans une chambre se basant sur les résultats du capteur de dioxyde de carbone, permettant au capteur de dioxyde de carbone de réaliser une opération de détection lors d'un cycle de mesure prédéterminé ; et
un moyen de détermination d'une plage de concentration prédite (17) pour déterminer une plage de concentration dans laquelle une concentration de dioxyde de carbone prédite se situe, à partir de deux plages de concentration prédéfinies ou plus, la concentration de dioxyde de carbone prédite étant prédite pour être détectée à un moment de mesure ultérieur et étant calculée en se basant sur les résultats du moyen de détection de la concentration de dioxyde de carbone ;
un moyen de détermination du cycle de mesure (19) pour déterminer le cycle de mesure de sorte que plus une concentration de la limite supérieure est élevée dans la plage de concentration déterminée par le moyen de détermination de la place de concentration, plus le cycle de mesure devient court où le capteur de dioxyde de carbone peut réaliser une opération de détection ;
un moyen de détection d'une concentration élevée (21) pour rendre le moyen de détermination de la plage de concentration prédite non opérationnel si le cycle de mesure devient le plus court et pour produire un signal de détermination de concentration élevée en fonction de la concentration de dioxyde de carbone détectée par le moyen de détection de la concentration de dioxyde de carbone, le signal de détermination d'une concentration élevée étant produit lorsque un certain nombre de fois oùla concentration de dioxyde de carbone dans la chambre a atteint successivement une concentration élevée prédéterminée dans l'une des plages de concentration prédéfinies les plus élevées, atteint lenombre de fois q prédéfini (q étant un nombre entier non inférieur à deux mais non supérieur à six) ; et
un moyen de production d'un signal d'alarme (23) pour produire un signal d'alarme lorsque le moyen de détermination d'une concentration élevée produit le signal de détermination d'une concentration élevée.

2. Circuit de détermination de la concentration de dioxyde de carbone selon la revendication 1, dans lequel
le moyen de détermination d'une plage de concentration prédite comprend les fonctions consistant à :
déterminer que la concentration de dioxyde de carbone prédite se situe dans une plage de concentration supérieure à l'une des plages de concentration actuelles lorsque le moyen de détermination d'une plage de concentration prédite détermine une fois que la concentration de dioxyde de carbone prédite se situe dans la plage de concentration supérieure à la plage de concentration actuelle ; et
déterminer que la concentration de dioxyde de carbone prédite se situe dans une plage de concentration inférieure à la plage de concentration actuelle lorsque le moyen de détermination d'une plage de concentration prédite détermine successivement lenombre de fois p prédéfini (p étant un nombre entier non inférieur à deux mais non supérieur à six) où la concentration de dioxyde de carbone prédite se situe dans la plage de concentration inférieure à la plage de concentration actuelle.

3. Circuit de détermination de la concentration de dioxyde de carbone selon la revendication 1 ou 2, dans lequel
le moyen de détermination d'une concentration élevée comprend une fonction consistant à déterminer que la concentration de dioxyde de carbone dans la chambre se situe dans une plage de concentration inférieure à la plage de concentration la plus élevée et rendre le moyen de détermination d'une plage de concentration prédite fonctionnel si le moyen de détermination d'une concentration élevée détermine successivement lenombre de fois r prédéfini (r étant un nombre entier non inférieur à deux, mais non supérieur à six) où la concentration de dioxyde de carbone dans la chambre est une concentration prédéterminée ou inférieure dans la plage de concentration inférieure à la plage de concentration la plus élevée.

4. Circuit de détermination de la concentration de dioxyde de carbone selon la revendication 1, comprenant en outre :
un moyen de production d'un signal d'avertissement (25) pour produire un signal d'avertissement indiquant que la concentration de dioxyde de carbone dans la chambre se rapproche de la concentration élevée si le cycle de mesure devient le plus court et la concentration de dioxyde de carbone dans la chambre atteint une concentration prédéterminée ou plus élevée qui est inférieure à la concentration élevée prédéterminée, dans la plage de concentration la plus élevée, et ensuite arrêter la production du signal d'avertissement si le moyen de production d'un signal d'avertissement détecte successivement le nombre de fois prédéfinioù la concentration de dioxyde de carbone dans la chambre est inférieure à la concentration prédéterminée.

5. Circuit de détermination de la concentration de dioxyde de carbone selon la revendication 1, comprenant en outre :
un circuit de détection de la tension de la batterie primaire (29) qui conduit le moyen de production d'un signal d'alarme à produire le signal d'alarme si le circuit de détection de la tension de la batterie primaire mesure une tension de la batterie primaire une pluralité de fois pendant un cycle prédéterminé pendant une période de temps prédéterminée au moment du démarrage du circuit de détermination de la concentration de dioxyde de carbone et détecte successivement un nombre de fois prédéfini où la tension mesurée est une tension prédéterminée ou inférieure.

6. Circuit de détermination de la concentration de dioxyde de carbone selon la revendication 5, comprenant en outre :
un moyen de détermination d'une concentration élevée de départ pour déterminer si la concentration de dioxyde de carbone dans la chambre a, oui ou non, atteint successivement la concentration élevée prédéterminée ou plus élevée le nombre de fois prédéfini pendant la période de temps prédéterminée au moment du démarrage du circuit de détermination de dioxyde de carbone, en se basant sur la concentration de dioxyde de carbone détectée par le moyen de détection de la concentration de dioxyde de carbone ;
le moyen de production d'un signal d'alarme produisant le signal d'alarme si le moyen de détermination d'une concentration élevée de départ détermine que la concentration de dioxyde de carbone dans la chambre a atteint successivement la concentration élevée prédéterminée ou plus élevée le nombre de fois prédéfini.

7. Circuit de détermination de la concentration de dioxyde de carbone selon la revendication 1, dans lequel
la concentration élevée est réglée à une valeur comprise dans la plage allant de 0,9 - 0,1 % à 0,9 - 0,1 % dans le moyen de détermination d'une concentration élevée,
le moyen de détermination d'une plage de concentration prédite comprend une première plage de concentration, une deuxième plage de concentration et une troisième plage de concentration qui ne sont réglées de sorte que 0,9 ± 0,1 % soit inclus dans la plage de concentration la plus élevée dans les première à troisième plages de concentration ; et
le moyen de détermination du cycle de mesure est configuré pour régler le cycle de mesure de 8 ± 1 minutes correspondant à la première plage de concentration, pour régler le cycle de mesure de 2 ± 0,5 minutes correspondant à la deuxième plage de concentration et pour régler le cycle de mesure de 10 ± 2 secondes correspondant à la troisième plage de concentration.

8. Circuit de détermination de la concentration de dioxyde de carbone selon la revendication 1, dans lequel
le circuit de détermination de la concentration de dioxyde de carbone est implanté dans un dispositif de combustion installé en intérieur et le signal d'alarme est utilisé en tant que signal qui commande un dispositif d'extinction d'incendie fourni au niveau du dispositif de combustion pour réaliser une opération d'extinction d'incendie.
